# EUROPÄISCHE PATENTSCHRIFT

(11) **EP 2 375 224 B1**
(45) Veröffentlichungstag und Bekanntmachung des Hinweises auf die Patenterteilung: **10.02.2016**
(21) Anmeldenummer: 10156936.6
(22) Anmeldetag: 18.03.2010
(51) Int. Cl.: G01F 1/66, G01F 15/18

(54) **Ultraschallmessvorrichtung und Verfahren zur Messung der Strömungsgeschwindigkeit eines Fluids**
Ultrasound measuring device and method for monitoring the flow speed of a liquid
Dispositif de mesure des ultrasons et procédé de mesure de la vitesse d'écoulement d'un liquide

(43) Veröffentlichungstag der Anmeldung: 12.10.2011
(73) Patentinhaber: SICK Engineering GmbH, 01458 Ottendorf-Okrilla (DE)
(72) Erfinder: Dietz, Toralf, 01465 Dresden (DE); Schröter, Gerry, 01239 Dresden (DE); Gurr, Andreas, 01127 Dresden (DE)
(74) Vertreter: Hehl, Ulrich

(56) Entgegenhaltungen:
- EP-A1- 0 566 859
- EP-A1- 2 146 189
- WO-A1-2005/005932
- WO-A1-2008/009870
- DE-A1- 2 833 793
- DE-A1-102004 044 607
- US-A1- 2002 092 362
- US-A1- 2009 151 472

## Beschreibung

Die Erfindung betrifft eine Ultraschallmessvorrichtung und ein Verfahren zur Messung der Strömungsgeschwindigkeit eines Fluids nach dem Oberbegriff von Anspruch 1 beziehungsweise 13.

Fluidgeschwindigkeiten in Rohrleitungen und Kanälen können mittels Ultraschallmesstechnik nach dem Differenzlaufzeitverfahren ermittelt werden. Dabei werden UI-traschallpulse von einem Paar Ultraschallwandler ausgesandt und empfangen, die einander gegenüber an einer Wandung der Rohrleitung an den Enden eines Messpfads quer zu der Strömung des Fluids angeordnet sind. Aus der Laufzeitdifferenz des Ultraschalls auf dem Messpfad mit der Strömung und in Gegenrichtung entgegen der Strömung wird die Strömungsgeschwindigkeit bestimmt. Die Ultraschallwandler arbeiten dabei wechselseitig als Sender und Empfänger. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus auch der Betriebsvolumenstrom, welcher bei nach Volumen abgerechnetem Fluid häufig die interessierende Messgröße ist.

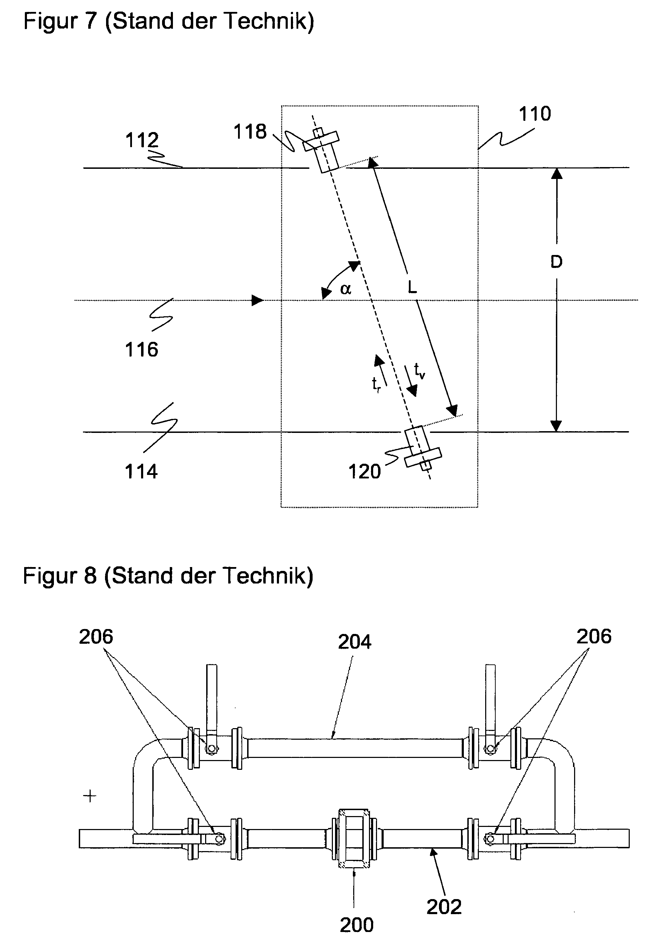

Dieses bekannte Messprinzip ist in Figur 7 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Die Ultraschallwandler 118, 120 arbeiten wechselweise als Sender und Empfänger. Die durch das Gas transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus der Betriebsvolumenstrom. Die geometrischen Verhältnisse sind durch die folgenden Variablen beschrieben:
v: Strömungsgeschwindigkeit des Fluids in der Leitung
L: Länge des Messpfades zwischen den beiden Ultraschallwandlern
α: Winkel, unter dem die Ultraschallwandler senden und empfangen
Q: Volumenstrom
D: Durchmesser der Leitung
tᵥ: Laufzeit des Ultraschalls mit der Strömung
tᵣ: Laufzeit des Ultraschalls gegen die Strömung

Daraus ergeben sich für die gesuchten Größen v und Q folgende Beziehungen:
v=L/(2 cos α) (1/tᵥ-1/tᵣ) und
Q=v 1/4 D² π.

Ein wichtiges und anspruchsvolles Anwendungsfeld sind Gaszähler für Erdgaspipelines, wo wegen der immensen beförderten Gasmengen und des Rohstoffwerts schon geringste Abweichungen in der Messgenauigkeit deutlich merklichen Werten entsprechen. Ultraschalldurchflussmesser werden in diesem Bereich der Großgasmengenmessung auf Grund ihrer Genauigkeit, Wartungsfreiheit und Selbstdiagnosemöglichkeiten bei Gastransport und Gaslagerung zunehmend eingesetzt. Im Bereich Verteilung/Distribution dagegen ist der Kostendruck gegenüber etablierten Technologien wie Turbinenradzählern und Drehkolbenzählern noch zu hoch.

Um mit der erreichten Genauigkeit Anforderungen an eichpflichtige Messungen zu erfüllen, ist nämlich ein hoher Aufwand erforderlich. Da ein Ultraschallmesspfad die Strömungsgeschwindigkeit nur an definierten Positionen abtastet, wird letztlich die mittlere Strömungsgeschwindigkeit über den gesamten Strömungsquerschnitt extrapoliert. Hohe Genauigkeiten lassen sich daher nur erzielen, wenn die Strömung gut reproduzierbar ist, beziehungsweise ein ungestörtes Strömungsprofil aufweist oder wenn eine Vielzahl von Messpfaden die Unregelmäßigkeiten aufzulösen vermag. Um hohe Genauigkeiten zu erreichen, kann das Strömungsprofil gezielt beeinflusst werden, beispielsweise über Strömungsgleichrichter oder lange, gerade Einlaufstrecken. Strömungsgleichrichter sind aber nur begrenzt in der Lage, die Strömung zu vergleichmäßigen, und lange, gerade Einlaufstrecken benötigen viel Bauraum und stehen nicht immer zur Verfügung. Eine Messung auf zahlreichen Messpfaden erfordert ein entsprechend komplexes Messgerät.

Besonders beim Einsatz von Ultraschallmessgeräten im Bereich Distribution erfolgt die Installation typischerweise in Gasdruckregelstationen, in denen vom Mittel- oder Hochdruck der Transportleitung auf Nieder- beziehungsweise Mitteldruck des Verteilernetzes reduziert wird. Diese Reduktion erfolgt über Regelventile, und derartige Bauteile erzeugen Störschall im Ultraschallbereich, der sich den eigentlichen Messsignalen überlagert und somit die Messgenauigkeit beeinträchtigen kann.

Insgesamt bedeutet dies für den Anwender herkömmlicher Ultraschallmessgeräte den Nachteil, dass zusätzliche Installationen vorgenommen werden müssen, welche erhöhte Kosten und Baugröße mit sich bringen.

Neben der Ultraschallmesstechnik werden mechanische Turbinenradzähler oder Drehkolbenzähler zur Gasmessung eingesetzt. Hier gibt es auch Ausführungen, bei denen die Strömung für den Zähler umgelenkt und nach der Messung wieder in die Strömungsrichtung der Rohrleitung zurückgelenkt wird. Für mechanische Messung ist die Ausbildung der Strömung weitgehend gleichgültig, so dass die Störung der ursprünglichen Strömung und Strömungsrichtung ohne Weiteres in Kauf genommen werden kann. Bei Ultraschallzählern ist man dagegen stets bestrebt, sie nur nach einer langen und vorzugsweise geraden Beruhigungsstrecke zu montieren, so dass die Strömung sich vergleichmäßigen kann, und dies durch Strömungsgleichrichter noch zu unterstützen. Weiterhin werden auch die Ultraschallzähler selbst so montiert und ausgebildet, dass das Fluid möglichst frei und ungestört strömen kann.

Die mechanische Messweise dieser Zähler hat außerdem den Nachteil, dass bewegte und damit stör- und verschleißanfällige Teile direkt in der Strömung angeordnet sind. Weiterhin fehlen die diagnostischen Eigenschaften, welche im Ultraschallzähler durch die Beobachtung zusätzlicher Messgrößen gewonnen werden können. Der Status des Messgeräts oder des Messprozesses kann also nicht überwacht und analysiert werden, beziehungsweise hierfür ist jeweils eine sehr kosten- und zeitaufwändige Prüfung erforderlich. Aufgrund der fehlenden Diagnosemöglichkeiten und damit fehlender Kontrolle über die Messgenauigkeit ist dies angesichts der hohen Werte, welche schon geringen Genauigkeitsabweichungen entsprechen können, für den Benutzer unbefriedigend.

Aus der DE 10 2005 062 629 A1 ist ein ultraschallbasierter Wasserzähler für den Haushaltsgebrauch bekannt. Dabei wird das Wasser radial aus der Strömung umgelenkt und durch eine Messkammer über einen Austrittsbereich der Strömung wieder zugeführt. Die Messkammer bildet einen Ring, dessen Ebene parallel zu der Strömungsrichtung in der Rohrleitung liegt. Ultraschall durchstrahlt den Ring mit Hilfe von mehreren umlenkenden Reflektoren. Die Messkammer ist mit zahlreichen aufwändig geformten Vorsprüngen und Öffnungen versehen, um eine gleichmäßige Ringströmung zu erzeugen, welche nach der Lehre der DE 10 2005 062 629 A1 auch dafür sorgen soll, die Reflektoren optimal zu spülen und Luftblasen zu vermeiden, so dass die Messung nicht beeinträchtigt wird. Die Gestaltung der Messkammer und somit der Strömungs- und Schallpfade in ihrem Inneren ist somit sehr aufwändig. Zusätzlich zu den Kosten, die solche Bauteile mit sich bringen, müsste auch die Ultraschallmessung beim Einsatz des herkömmlichen Ringprinzips in Gaspipelines sehr genau auf diese komplizierten Pfade eingestellt werden, wobei nur sehr begrenzt auf die Erfahrungen herkömmlicher Ultraschallmessgeräte zurückgegriffen werden kann, welche direkt in der nicht abgelenkten Hauptströmung angeordnet sind.

Die US 4,506,552 beschreibt einen Ultraschall-Durchflussmesser für hochviskose bzw. tiefkalte Fluide. Um Blasen durch Temperaturgradienten und resultierende Turbulenzen zu vermeiden, liegt die Messtrecke innerhalb eines Doppelrohres, so dass in der Außenwand ebenfalls das Fluid strömt und somit zugleich eine Kühlung der Messstrecke bewirkt. In einer Ausführungsform wird der koaxiale Strömungsweg in einem aufgesetzten Rohrstück geführt.

Die DE 29 24 561 B1 zeigt einen Brauchwasserzähler mit einer Ultraschallmesstrecke, welche in einer Ausführungsform senkrecht zur Strömungsrichtung der Wasserleitung liegt, indem ein 90°-Rohleitungsstück das Wasser der Messstrecke zuleitet und ein entsprechendes 90°-Rohrleitungsstück das Wasser wieder in die Wasserleitung zurü ckfü h rt.

Die EP 1 227 303 A2 zeigt einen weiteren Ultraschalldurchflusszähler, bei dem das Fluid aus der Leitung heraus auf eine parallel zu der Leitung verlaufende Messtrecke umgelenkt wird. Die Messkapsel ist beim Einsatz als Wasserzähler auf eine übliche Armatur montierbar.

In der EP 1 909 076 A1 wird ein ähnlicher Grundaufbau für einen Durchflussmesser dargestellt, dessen Messkapsel auf eine Anschlussarmatur angebracht wird und bei dem eine Ultraschallmesstrecke in einem Rohr parallel zur eigentlichen Leitung realisiert ist.

Die US 4,140,012 offenbart einen Ultraschalldurchflussmesser, bei dem die Messtrecke senkrecht und mittig innerhalb der eigentlichen, im Bereich der Messtrecke im Durchmesser vergrößerten Leitung angeordnet ist, während eine im 45°-Winkel stehende Umlenkung das Fluid zwingt, mittels zweimaligem senkrechten Richtungswechsel die Messtrecke zu durchströmen.

In der EP 2 146 189 A1 zeigt in einer koaxialen Ausführungsform der Strömungskanal scharfe Umlenkungen und abrupte Querschnittsveränderungen. Dies hat für eine Ultraschallmessung unerwünschte Folgen. Die Strömung reißt in der Ultraschallmesstrecke ab, es entstehen Rückströmungsgebiete, die instabile Messwerte zur Folge haben, und starke Turbulenzen, welche die Signalauswertung erschweren. Außerdem ist durch die Strömungsführung der Druckverlust sehr hoch. Da der zulässige Druckverlust des Messgeräts beschränkt ist, verbleibt für eine Strömungskonditionierung keine Druckreserve. Schließlich sind die Ultraschallwandler im Inneren der Zuströmung angeordnet, so dass die elektrische Kontaktierung durch das umströmende Gas erfolgen muss. Das erfordert drucktragende elektrische Durchführungen.

Aus der WO2008/009870A1 ist ein Gasdurchflussmesser bekannt, bei dem ein schleifenförmiger Bereich vorgesehen ist. An dem Ort, an dem sich Eingang und Ausgang der Schleife treffen, wird eine Schallquelle angeregt, um ein Schallsignal mit und gegen die Strömung durch die Schleife zu senden. Zwei Mikrophone am Eingang und Ausgang messen die Laufzeitdifferenz der beiden Schallwege, um den Durchfluss zu bestimmen.

Die DE 28 33 793 A1 beschreibt eine Ultraschall-Durchflussmesseinrichtung für Dieselkraftstoff auf dessen Weg von einem Tank zu einer Einspritzpumpe. Ein Ultraschallimpulsgeber ist zwischen den Schenkeln eines schleifenförmig verlegten Leitungsabschnitts angeordnet, so dass sich das Schallsignal mit und gegen die Strömung durch die Schleife fortpflanzt. Mit Hilfe von Ultraschalldetektoren am Anfang und Ende des schleifenförmigen Bereichs wird anhand der Laufzeitdifferenz der Durchfluss gemessen.

In der EP 0 566 859 A1 wird ein Ultraschall-Durchflussmesser mit einem schneckenförmigen Messkanal offenbart. Ein Ultraschallwandler sendet Ultraschall mit und gegen die Strömung und empfängt die beiden Signale, um aus dem Zeitversatz auf die Strömungsgeschwindigkeit zu schließen. In einer anderen Ausführungsform sind 1½ Windungen des schneckenförmigen Messkanals vorgesehen, wobei je ein Ultraschallwandler am Eingang und am Ausgang montiert ist.

Aus der US 2002/0092362 A1 ist eine Durchflussmessung an einem Regenwasserablauf bekannt. Dabei ist ein S-förmiges Siphon vorgesehen, in dem aus einem Auffangschacht Regenwasser zunächst nach unten, dann nach einer u-förmigen Umlenkung wieder ein Stück nach oben und schließlich nach nochmaliger Umlenkung nach unten abfließt. In dem Zwischenbereich, in dem das Regenwasser nach oben strömt, ist eine Ultraschallmessung des Durchflusses mit einem angeklemmten Durchflussmesser vorgesehen.

Die DE 10 2004 044 607 A1 offenbart ein Durchflussmessgerät mit zumindest zwei Ultraschallwandlern, welches in einer Ausführungsform als Clamp-On-Durchflussmessgerät ausgebildet ist.

Ein weiterer Nachteil bei herkömmlichen Ultraschallmessgeräten ist die Art der Montage. Das Ultraschallmessgerät wird üblicherweise anstelle eines Rohrleitungsabschnitts angeflanscht. Entsprechend aufwändig ist ein Austausch oder eine Wartung. Derartige Wartungen sind auch erforderlich, um das eichpflichtige Ultraschallmessgerät regelmäßig zu überprüfen und zu rekalibrieren. Dabei ist die Kalibrierung in einem besonderen Hochdruckprüfstand vorzunehmen, der keineswegs in örtlicher Nähe zu dem Betriebsort liegen muss. Dabei muss der komplette Zähler einschließlich des drucktragenden Gehäuses aus der Leitung ausgebaut, eingeschickt und danach wieder eingebaut werden. Ein zwischenzeitlicher Betrieb ist nur möglich, wenn ein eigens für den Einsatzort kalibriertes Ersatzteil eingebaut wird.

Figur 8 illustriert die herkömmliche Wartung einer Ultraschallmessvorrichtung 200. Dazu wird der Rohrleitungsabschnitt 202 unterbrochen oder drucklos geschaltet. Um während dieser Zeit die Versorgung weiterhin zu gewährleisten, ist eine redundante zweite Leitung 204 vorgesehen. Durch Umlegen von Absperrungen 206 wird der Gasstrom von dem Rohrleitungsabschnitt 202 in die zweite Leitung 204 gelenkt und umgekehrt.

Durch den redundanten Leitungsaufbau entstehen erhebliche Mehrkosten. Der Mehraufwand ist besonders unökonomisch deshalb, weil die Ersatzleitung nur selten genutzt wird. Die typische Einsatzdauer der Ultraschallmessvorrichtung 200 beträgt fünf Jahre und mehr, während die Wartung oder ein Austausch der Ultraschallmessvorrichtung 200 mit einem rekalibrierten Ersatzteil nur wenige Stunden dauert.

Nach der Wartung muss der Rohrleitungsabschnitt 202 wieder mit Druck beaufschlagt werden. Da in Erdgasversorgungsleitungen explosive, unter Druck stehende Medien transportiert werden, sind umfangreiche Sicherheitsmaßnahmen zu beachten, und es darf nur speziell geschultes Personal eingesetzt werden. Deshalb sind die Wartungsarbeiten herkömmlich mit hohen Kosten verbunden.

Aus der DE 10 2007 028 431 A1 ist ein Ultraschallzähler auf einem austauschbaren Einsatz bekannt. Das Problem, wie dieser Einsatz in einer unter Druck stehenden Leitung ausgetauscht werden könnte, ist darin aber nicht gelöst.

Auch die EP 2 146 189 A1 erwähnt einen austauschbaren Messeinsatz. Bei dessen Wiedereinbau muss aber gewährleistet sein, dass das gesamte Gas die Messsektion durchströmt. Aufgrund der innenliegenden Messsektion ist ein Dichtigkeitsnachweis zwischen Zuströmung und Abströmung nur mit sehr hohem Aufwand zu führen.

Daher ist Aufgabe der Erfindung, eine genaue und einfache Ultraschallmessung von Strömungsgeschwindigkeiten zu ermöglichen.

Diese Aufgabe wird durch eine Ultraschallmessvorrichtung gemäß Anspruch 1 und ein Verfahren zur Messung der Strömungsgeschwindigkeit eines Fluids gemäß Anspruch 13 gelöst. Dabei geht die erfindungsgemäße Lösung von dem Grundgedanken aus, das Fluid aus einer Hauptströmungsrichtung in der Rohrleitung in einen beispielsweise stutzenartigen Aufsatz abzulenken. Dabei wird die Strömung auf jedem Leitungsabschnitt nur um einen Höchstwinkel abgelenkt und in ihrem Querschnitt möglichst unverändert belassen. Dies wird durch eine Schleife erreicht, also anschaulich einen Looping oder jedenfalls einen Strömungsweg, der eine räumliche 360°-Kurve beschreibt. Auf diese Weise kann die Strömung unabhängig von den Leitungsabschnitten stromauf der Ultraschallmessvorrichtung und damit sehr reproduzierbar vermessen werden. Zum anderen wird der Ultraschallmessbereich wesentlich leichter zugänglich.

Die erfindungsgemäße Lösung hat den Vorteil, dass die Messstelle reproduzierbar von dem am Eingang des Messgerät vorliegenden Strömungsprofil akustisch entkoppelt ist und zugleich eine Schalldämmung gegenüber vorgeschalteten Störschallquellen erfolgt, beispielsweise gegenüber Druckregelventilen. Es entsteht nur ein geringer Druckverlust, so dass ausreichende Druckreserven für eine Strömungskonditionierung vorhanden sind. Die Ultraschallmessvorrichtung hat eine sehr kleine Einbaulänge und kommt wegen des reproduzierbaren Strömungsverhaltens mit einer minimalen Anzahl von Ultraschallmesspfaden aus.

Dabei werden sämtliche Vorzüge der Ultraschallmessung gegenüber mechanischen Messprinzipien, wie Drehkolbenzähler oder Turbinenradzähler, mit allen einleitend genannten Vorteilen einschließlich stabiler Messwerte über einen größeren Durchflussbereich erzielt. Die erfindungsgemäße Strömungsführung ermöglicht einen modularen Aufbau der Ultraschallmessvorrichtung. Dabei kann ein drucktragender oder druckloser Ultraschallmessbereich beziehungsweise ein Ultraschallmessbereich für Hochdruck und Niederdruck gefertigt werden, mit freier konstruktiver Gestaltung hinsichtlich Materialauswahl, Wandstärke und Ausführung der Ultraschallwandler. Da der Ultraschallmessbereich gut zugänglich ist, kann die Dichtigkeit sowohl zur Umgebung als auch zwischen der Zuströmung und der Abströmung einfach nachgewiesen werden. Außerdem sind auch die Ultraschallwandler selbst gut zugänglich und somit einfach und kostengünstig kontaktierbar. Trotz dieser Vorteile hat die Ultraschallmessvorrichtung eine Konstruktion, die eine kostengünstige Herstellung erlaubt.

Die Schleife weist eine erste Ablenkung, einen Zuströmbereich, einen Bogen, einen Abströmbereich und eine zweite Ablenkung auf, so dass Fluid aus der Hauptströmungsrichtung durch die erste Ablenkung in den Zuströmbereich, von dort durch den Bogen in den Abströmbereich und schließlich durch die zweite Ablenkung zurück in die Hauptströmungsrichtung umlenkbar ist, wobei insbesondere die erste Ablenkung und die zweite Ablenkung einen rechten Winkel und der Bogen einen Winkel von 180° bilden. Alle diese Winkel müssen nicht notwendig ganz genau eingehalten werden, beispielsweise ist für die Ablenkungen auch ein Winkelbereich von 80°-100° oder sogar ein noch größerer Winkelbereich denkbar. Bei derartigen Abweichungen sollten jedoch abrupte Richtungswechsel und insgesamt eine zu unhandliche Bauform vermieden werden. Entsprechende Winkelabweichungen sind auch für den 180°-Bogen denkbar. Dabei müssen sich die Winkel insgesamt zu 360° addieren, damit das Fluid nach Durchströmen der Ultraschallmessvorrichtung erneut in der Hauptströmungsrichtung weiter strömt. Einen kleinen Beitrag zu diesem Gesamtwinkel können auch die Zuström- und Abströmbereiche durch Abweichungen von einer geradegestreckten Form leisten. Zu beachten ist, dass die Schleife eine dreidimensionale geometrische Form ist, so dass die Bedingung, wieder in der Ausgangsrichtung zu münden, längs und quer erfüllt werden muss.

Zuströmbereich und Abströmbereich weisen bevorzugt jeweils einen nebeneinander angeordneten Teilbereich auf und sind parallel zueinander ausgerichtet, wobei insbesondere eine Ebene, welche die beiden geraden Teilbereiche umfasst, senkrecht zu der Hauptströmungsrichtung steht. Innerhalb des Zuströmbereichs und des Abströmbereichs sind damit keinerlei störende Strömungsumlenkungen. Durch die parallele Anordnung kann im Gegensatz beispielsweise zu einer konzentrischen Anordnung der Strömungsquerschnitt konstant gehalten werden. Indem die genannte Ebene in der genannten Weise angeordnet ist, entsteht eine Schleife praktisch sowohl in Längs- wie in Querrichtung zu der Rohrleitung. Damit lässt sich eine besonders gleichmäßige und symmetrische Strömungsführung und eine besonders kompakte Bauweise der Ultraschallmessvorrichtung erreichen.

Die Schleife ist bevorzugt glatt und ohne scharfe Richtungsänderungen oder Einschnürungen ausgebildet, wobei insbesondere der Bogen eine Wandkontur aufweist, welche einen gezielten Strömungsabriss in einem für die Ultraschallmessung unkritischen Bereich bewirkt. Damit kann sich in dem Ultraschallmessbereich ein ausreichend beruhigtes Strömungsprofil ausbilden. Außerdem bleibt der Druckverlust minimal. Die spezielle Wandkontur in dem Bogen bewirkt einen gezielten Strömungsabriss in einem für die Ultraschallmessung unkritischen Bereich. In dem Ultraschallmessbereich wird dadurch eine Vergleichmäßigung des Strömungsprofils erreicht und störende Wirbel und Rückströmungsgebiete werden vermieden. So wird auch eine Messung bei hohen Strömungsgeschwindigkeiten und damit eine wesentliche Erweiterung des Messbereiches möglich.

In dem Zuströmbereich und/oder in dem Abströmbereich ist bevorzugt ein Strömungsgleichrichter vorgesehen. Dieser sorgt zusätzlich für eine reproduzierbare Strömung und damit hohe Messgenauigkeit. Besonders bei Anordnung im Zuströmbereich steht ausreichend Platz auch für komplexere Strömungsgleichrichter sowie durch den anschließenden Strömungsweg bis zu der Ultraschallmessstrecke auch ausreichend Wegstrecke für eine Vergleichmäßigung zur Verfügung. Wegen der erfindungsgemäßen Strömungsführung gibt es hinreichende Druckreserven für den Strömungsgleichrichter.

Der Ultraschallmessbereich ist in dem Abströmbereich vorgesehen, insbesondere mit genügend Abstand zu dem Bogen, so dass sich die Strömung bei Eintritt in den Ultraschallmessbereich reproduzierbar stabilisiert. Dabei sind noch bevorzugter gerade Teilstrecken des Abströmbereichs vor und/oder nach dem Ultraschallmessbereich angeordnet. Das Fluid hat dann zum Zeitpunkt der Ultraschallmessung schon einen Großteil der Schleife passiert und ist somit besonders effektiv von Störungen stromauf der Ultraschallmessvorrichtung entkoppelt. Dies gilt noch verstärkt, wenn sich in dem Zuströmbereich ein Strömungsgleichrichter befindet. Zusätzlich oder alternativ könnte aber auch in dem Abströmbereich ein Strömungsgleichrichter angeordnet werden.

Die Ultraschallwandler sind in dem Ultraschallmessbereich derart angeordnet, dass der ausgesandte und empfangene Ultraschall zumindest eine Komponente in Querrichtung der Strömung aufweist. So können die Ultraschallwandler seitlich montiert werden. Das Gegenstück zu einer solchen Ausführungsform mit Messung quer zu der Strömung sind Ultraschallwandler, die längs angeordnet werden, beispielsweise oben ausgangs des Bogens und unten am Strömungsausgang. Das ist deshalb ungünstiger, weil in die Messung nicht beruhigte Strömungsanteile eingehen, was zu ungenaueren und unzuverlässigeren Messwerten führt.

Die Ultraschallmessvorrichtung weist bevorzugt ein rohrförmiges Basisstück mit Anschlussbereichen, insbesondere Flanschen für die Rohrleitung auf, welches die erste Ablenkung und die zweite Ablenkung umfasst. Dieses Basisstück ist kompatibel zu den Standardeinbaulängen beispielsweise von Turbinenradzählern oder Drehkolbengaszählern und wird in verschiedenen Nennweiten und mit verschiedenen Anschlussflanschen hergestellt, die für die jeweilige Rohrleitung benötigt werden. Das Basisstück verbleibt nach der Montage stets in der Rohrleitung und ist so als Grundgehäuse funktional und konstruktiv von der Messsektion trennbar. Damit kann ein einfach herzustellender und montagefreundlicher Messaufsatz gefertigt werden.

Die Ultraschallmessvorrichtung weist bevorzugt mindestens ein Aufsatzmodul auf, welches jeweils ein Verlängerungsstück für den Zuströmbereich und den Abströmbereich umfasst und welches mit dem Basisstück oder einem anderen Aufsatzmodul verbindbar und von dem Basisstück oder dem anderen Aufsatzmodul lösbar ist, wobei ein abschließendes Aufsatzmodul den Bogen umfasst. In der Ausführungsform mit der geringsten Anzahl von Aufsatzmodulen ist demnach nur das einzige abschließende Aufsatzmodul mit dem Bogen vorgesehen. In dem abschließenden Aufsatzmodul können die Verlängerungsstücke gegebenenfalls nur andeutungsweise und sehr kurz vorgesehen sein.

Durch die Aufsatzmodule können über dem Basisstück nach Bedarf zusätzliche Baugruppen montiert werden. Diese können beispielsweise eine Umleitung der Strömung, eine zusätzliche Konditionierung der Strömung oder zusätzliche Messaufgaben ermöglichen. Die äußeren Abmessungen der Ultraschallmessvorrichtung in der Rohrachse, also in Hauptströmungsrichtung, werden durch die Aufsatzmodule nicht verändert, denn die tatsächliche Einbaulänge wird allein durch die geometrischen Abmessungen des Basisstücks bestimmt. Die Ultraschallmessvorrichtung kann daher kompatibel zu bisher eingesetzten Gaszählern gebaut werden. Die Aufsatzmodule können einfach nach oben ausgetauscht werden, ohne dass das Basisstück aus der Rohrleitung genommen werden muss. Die Strömungsführung in der Ultraschallmessvorrichtung wird in erster Linie durch die Schleife innerhalb der Aufsatzmodule geprägt und ist damit weitgehend frei gestaltbar, ohne in die Rohrleitung eingreifen zu müssen. Die Modulbauweise aus Basisstück und Aufsatzmodulen erlaubt eine flexible und kostengünstige Fertigung, Montage, Veränderung und Wartung der Ultraschallmessvorrichtung.

Die Ultraschallmessvorrichtung umfasst bevorzugt mindestens ein als Messmodul ausgebildetes Aufsatzmodul mit dem Ultraschallmessbereich und umfasst insbesondere auch den Strömungsgleichrichter. Das Messmodul kann außerhalb der Rohrleitung vorkalibriert werden. Bei einem Austausch der Ultraschallmessvorrichtung verbleibt dann das Basisstück in der Rohrleitung, und das vorhandene Messmodul wird gegen ein vorkalibriertes Messmodul ausgetauscht. Die Ausgestaltung des Ultraschallmessbereichs und der Strömungskonditionierung ist somit unabhängig von dem Basisstück und beliebig variierbar. Das Messmodul kann für jede Nennweite der Rohrleitung identisch aufgebaut sein, obwohl andererseits auch Anpassungen denkbar sind. Es können weitere oder alternative Messmodule vorgesehen sein, beispielsweise ein redundantes Messmodul für die Zeit des Austauschs, aber auch unterschiedliche Messmodule für andere Druckverhältnisse, andere Zusammensetzungen des Fluids und dergleichen.

Die Ultraschallmessvorrichtung weist bevorzugt ein als Bypassmodul ausgebildetes Aufsatzmodul mit einer Querleitung zwischen dem Zuströmbereich und dem Abströmbereich oder eine in das Basisstück integrierte Querleitung auf, wobei eine Bypassumlenkung vorgesehen ist, die wahlweise in einer Stellung die Strömung zu der Querleitung und aus der Querleitung sperrt und die Strömung zu dem Zuströmbereich und aus dem Abströmbereich freigibt und in einer anderen Stellung die Strömung zu dem Zuströmbereich und aus dem Abströmbereich sperrt und die Strömung zu der Querleitung und aus der Querleitung freigibt. Mit Hilfe der Querleitung kann der Volumenstrom so umgeleitet werden, dass ein anderes Aufsatzmodul wie beispielsweise ein Messmodul drucklos montierbar und demontierbar ist. Der Fluidstrom, beispielsweise der Gasstrom zum Verbraucher, wird dabei nicht unterbrochen. Damit entfallen zusätzliche bauliche Maßnahmen an der Rohrleitung, wie Absperreinrichtungen, Bypassleitungen, Entlüftungseinrichtungen oder dergleichen, und dies führt zu einer erheblichen Reduktion der Anlagenkosten. Die Rohrleitung selbst bleibt während der Wartungsarbeiten mit dem Betriebsdruck beaufschlagt. Da kein Entlüften und Befüllen des zu wartenden Rohrleitungsabschnittes erforderlich ist, verkürzen sich die Wartungszeiten. Außerdem sind wegen des Verbleibens des Basisstücks in der Rohrleitung keine aufwändigen Dichtheitstests bei Wiederinbetriebnahme der Rohrstrecke notwendig. Die Bypassleitung kann dabei in das Basisstück integriert sein. Alternativ ist ein eigenes Bypassmodul vorgesehen.

Das Bypassmodul ist so ausgeführt, dass im Messbetrieb die Strömung zu den übrigen Modulen und insbesondere dem Messmodul wenig beeinflusst wird. Dadurch sind keine zusätzlichen Maßnahmen in diesen Modulen notwendig, um deren einwandfreie Funktion und eine ungestörte Messung zu gewährleisten. Durch den modularen Aufbau passt das Bypassmodul an die anderen Aufsatzmodule oder das Basisstück. Auch ist eine nachträgliche Montage des Bypassmoduls in bereits eingebaute Ultraschallmessvorrichtungen möglich.

Die Bypassumlenkung ist bevorzugt nach dem Prinzip eines Dreiwegehahns ausgebildet und weist insbesondere zwei T-fömig gelochte Kugeln mit Dichtungen auf, welche untereinander gekoppelt und somit gemeinsam aus der einen Stellung in die andere Stellung überführbar sind. Das wahlweise Umleiten der Strömung in die Querleitung, beispielsweise zum Austausch eines darüber angeordneten Aufsatzmoduls, oder zurück in die gesamte Schleife der Ultraschallmessvorrichtung ist so sehr einfach und zuverlässig möglich, beispielsweise über einen Hebel an der Außenseite. Das einfache Betätigen der kugelhahnartigen Konstruktion erfordert keinerlei tiefere Kenntnisse, und deshalb ist ein Austausch von Aufsatzmodulen auch mit weniger sicherheitstechnisch geschultem Personal möglich. Alternativ zu einer Bypassumlenkung nach dem Prinzip des Dreiwegehahns sind andere Formen von Ventilen, Schiebern, Klappen und dergleichen denkbar.

Die Ultraschallmessvorrichtung weist bevorzugt ein als Kalibrierungsmodul ausgebildetes Aufsatzmodul mit mindestens einem Paar Ultraschallwandler zur Plausibilisierung oder Kalibrierung der Messwerte des Ultraschallmessbereichs auf. Das Kalibrierungsmodul dient somit als Referenzmodul für ein Messmodul.

Bevorzugt ist die Verwendung der erfindungsgemäßen Ultraschallmessvorrichtung als Gaszähler an einer Gaspipeline. Dabei kommen die genannten Vorteile besonders gut zum Tragen, um eine zuverlässige, vom Betriebsort weitgehend unabhängige und der Eichpflicht genügende Messung sicherzustellen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine dreidimensionale Außenansicht einer ersten Ausführungsform einer erfindungsgemäßen Ultraschallmessvorrichtung;
- Fig. 1b: ein Längsschnitt der Ultraschallmessvorrichtung gemäß Figur 1 a;
- Fig. 1c: ein Querschnitt der Ultraschallmessvorrichtung gemäß Fig. 1a in Sichtrichtung auf ein Basisstück;
- Fig. 1d: ein Querschnitt analog Figur 1d mit der entgegengesetzten Blickrichtung auf eine Messsektion;
- Fig. 1e: eine Schnittdarstellung der Ultraschallmessvorrichtung gemäß Fig. 1a quer zu einer Hauptströmungsrichtung des Fluids;
- Fig. 2a: eine dreidimensionale Außenansicht einer zweiten Ausführungsform einer erfindungsgemäßen Ultraschallmessvorrichtung mit einem Bypass;
- Fig. 2b: ein Längsschnitt der Ultraschallmessvorrichtung gemäß Figur 2a;
- Fig. 2c: eine Schnittdarstellung der Ultraschallmessvorrichtung gemäß Figur 2a quer zu einer Hauptströmungsrichtung des Fluids;
- Fig. 3a: eine dreidimensionale Außenansicht einer zweiten Ausführungsform einer erfindungsgemäßen Ultraschallmessvorrichtung mit einem Bypass und einer Referenzmesssektion;
- Fig. 3b: ein Längsschnitt der Ultraschallmessvorrichtung gemäß Figur 3a;
- Fig. 3c: eine Schnittdarstellung der Ultraschallmessvorrichtung gemäß Figur 3a quer zu einer Hauptströmungsrichtung des Fluids;
- Fig. 4a: eine dreidimensionale Außenansicht eines Bypassmoduls;
- Fig. 4b: ein Längsschnitt durch das Bypassmodul gemäß Figur 4a;
- Fig. 5a: eine dreidimensionale Außenansicht eines Kalibrierungsmoduls;
- Fig. 5b: ein Längsschnitt durch das Bypassmodul gemäß Figur 5a;
- Fig. 6a: eine Schnittdarstellung eines Basisstücks mit integrierter Bypassleitung, wobei die Bypassleitung geschlossen ist und das Fluid durch die Messsektion strömt;
- Fig. 6b: eine Schnittdarstellung gemäß Fig. 6a bei offener Bypassleitung und druckloser Messsektion;
- Fig. 7: eine herkömmliche Anordnung zweier Ultraschallwandler quer zu einer Strömungsrichtung eines Fluids zur Erläuterung des Messprinzips; und
- Fig. 8: eine herkömmliche Rohrleitungsanordnung mit einer redundanten Rohrführung zur Umleitung des Fluids während eines Austauschs einer Ultraschallmessvorrichtung.

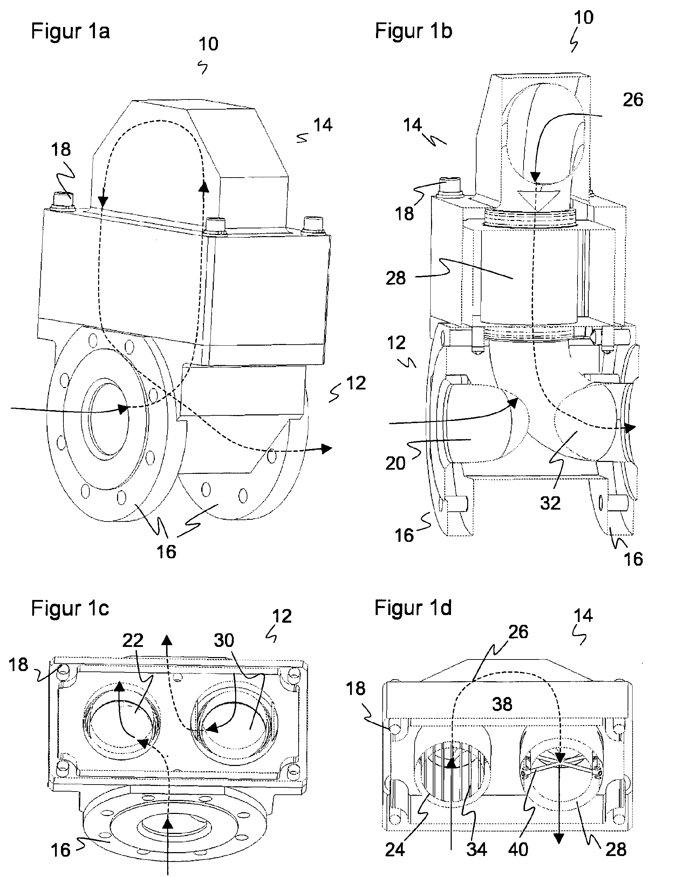

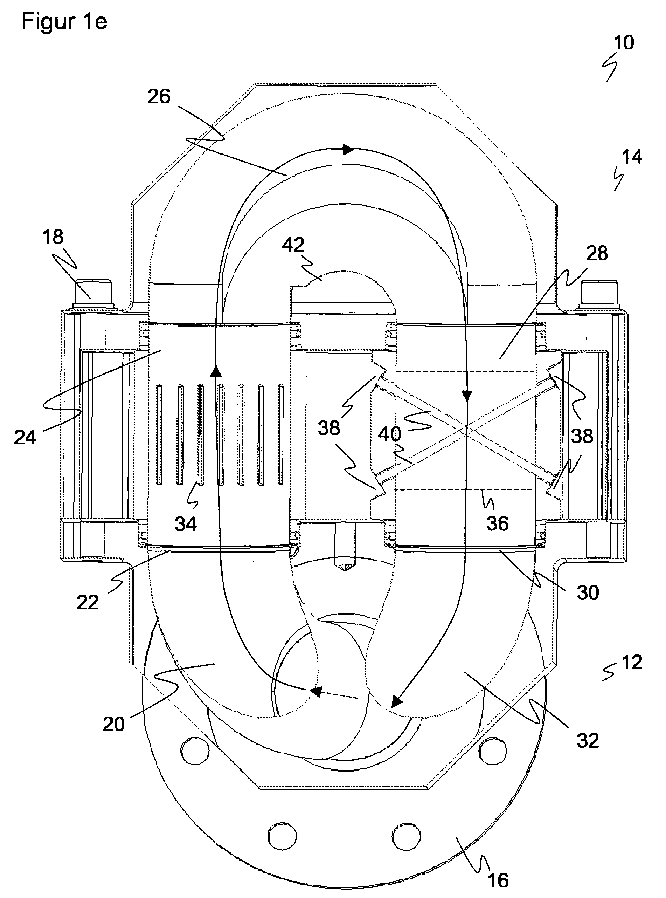

Figur 1 zeigt eine erste Ausführungsform einer erfindungsgemäßen Ultraschallmessvorrichtung 10 in verschiedenen Ansichten. Dabei ist Figur 1 a eine dreidimensionale Außenansicht, Figur 1 b ein Längsschnitt, Figur 1 c ein Querschnitt mit Sichtrichtung nach unten auf ein Basisstück 12, Figur 1d ein Querschnitt mit Sichtrichtung nach oben auf ein Messmodul 14 und Figur 1e eine Schnittdarstellung quer zu einer Hauptströmungsrichtung, also der Längsachse des Basisstücks 12.

Das Basisstück 12 weist Flanschbereiche 16 auf, mit denen es in eine bestehende Rohrleitung montiert wird, in der es einen entsprechenden Rohrleitungsabschnitt ersetzt. Alternativ kann auch eine andere Befestigung wie etwa ein Gewinde vorgesehen sein. In der Rohrleitung strömt ein Fluid in dessen axialer Richtung, die als Hauptströmungsrichtung bezeichnet wird, beispielsweise Erdgas in einer Gaspipeline. Mit Hilfe einer lösbaren Verbindung 18 ist das Messmodul 14 auf dem Basisstück 18 montiert. In einer alternativen Ausführungsform können Basisstück 18 und Messbereich 14 auch einstückig ausgebildet sein.

Die Ultraschallmessvorrichtung 10 verlagert die Messung von der Rohrleitung in eine Achse quer und insbesondere senkrecht zu der Hauptströmungsrichtung. Dazu wird die Strömung ohne abrupte Richtungsänderungen und ohne Querschnittssprünge in einer Schleife geführt, wie jeweils in den Figuren 1a-e durch einen Pfeil angedeutet und im Folgenden näher erläutert.

Das einströmende Fluid wird in dem Basisstück 12 in einer ersten Ablenkung 20 aus der Hauptströmungsrichtung um 90° seitlich nach oben geführt und tritt durch eine erste Öffnung 22 aus dem Basisstück 12 aus. Es durchströmt einen ersten geraden Teilbereich 24 und wird anschließend in einem 180°-Bogen 26 in die Gegenrichtung umgelenkt, in der es einen zweiten geraden Teilbereich 28 passiert, der parallel zu dem ersten Teilbereich 24 angeordnet ist. Durch eine zweite Öffnung 30 neben der ersten Öffnung 22 tritt das Fluid wieder in das Basisstück 12 ein, wo es durch eine zweite Ablenkung 32 erneut um 90° seitlich nach unten zurück in die Hauptströmungseinrichtung geführt wird und so die Ultraschallmessvorrichtung 10 in die Rohrleitung verlässt.

In dem ersten geraden Teilbereich 24 in dem Messmodul 14 ist ein Strömungsgleichrichter 34 angeordnet. Der Strömungsgleichrichter 34 ist in einer an sich bekannten Weise ausgebildet und sorgt dafür, dass sich im Zustrom eine vergleichmäßigte Strömung bildet und in den Bogen 26 eintritt. Der hierzu parallele, genaugenommen antiparallele zweite gerade Teilbereich 28 enthält einen Ultraschallmessbereich 36, in dem zwei Paare einander zugehöriger Ultraschallwandler 38 jeweils einen Ultraschallmesspfad 40 aufspannen. Grundsätzlich genügt auch ein Paar Ultraschallwandler 38 mit nur einem Messpfad 40, aber aus Normierungsgründen werden gewöhnlich mindestens zwei Messpfade 40 verwendet. Es sind zusätzliche Messpfade 40 denkbar, um die Messgenauigkeit bei verbleibenden Unregelmäßigkeiten der Strömung weiter zu verbessern. Eine nicht dargestellte Auswertungseinheit, welche beispielsweise als Teil des Messmoduls 14 bei den Ultraschallwandlern 38 oder in der Außenwandung des Messmoduls 14 angeordnet ist, erzeugt Ultraschall und wertet die empfangenen Ultraschallsignale nach dem einleitend beschriebenen Verfahren aus, um über eine Laufzeitdifferenz die Strömungsgeschwindigkeit des Fluids zu ermitteln.

In allen Strömungsbereichen werden scharfe Richtungsänderungen und Strömungseinschnürungen vermieden. Das gilt auch für den Bereich des Bogens 26, in dem die Strömung hinter dem Strömungsgleichrichter 34 dem Ultraschallmessbereich 36 zugeführt wird. Allerdings ist es vorteilhaft, die Innenwandung des Bogens 26 mit der dargestellten besonderen Wandkontur 42 zu versehen. Die Wandkontur 42 weist zunächst einen flachen Teilbereich auf, ehe sie in einen Bogen übergeht, und bildet so einen kleinen Vorsprung. Dies erzeugt einen gezielten Strömungsabriss in einem für die Ultraschallmessung unkritischen Bereich. Damit wird ein unerwünschter Strömungsabriss innerhalb des oder nahe dem Ultraschallmessbereich 38 verhindert und die Messung somit weiter stabilisiert.

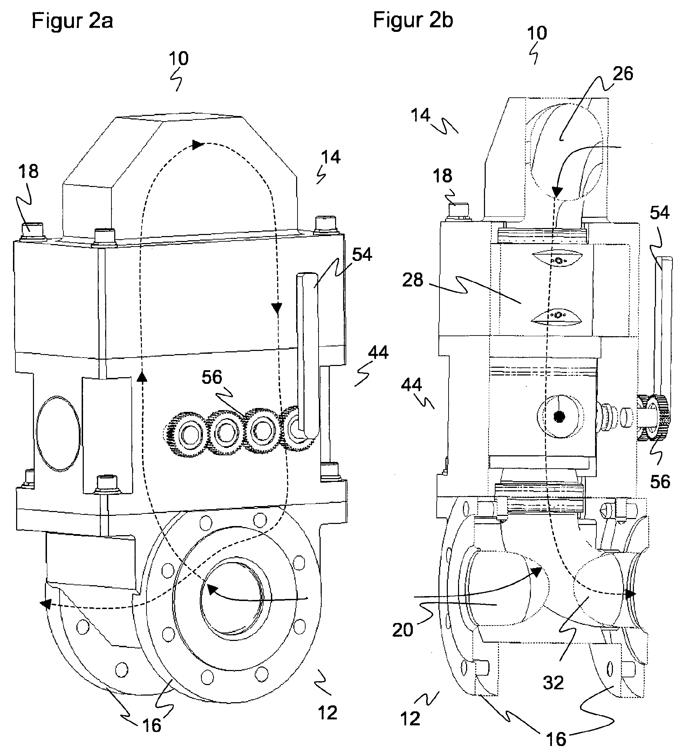

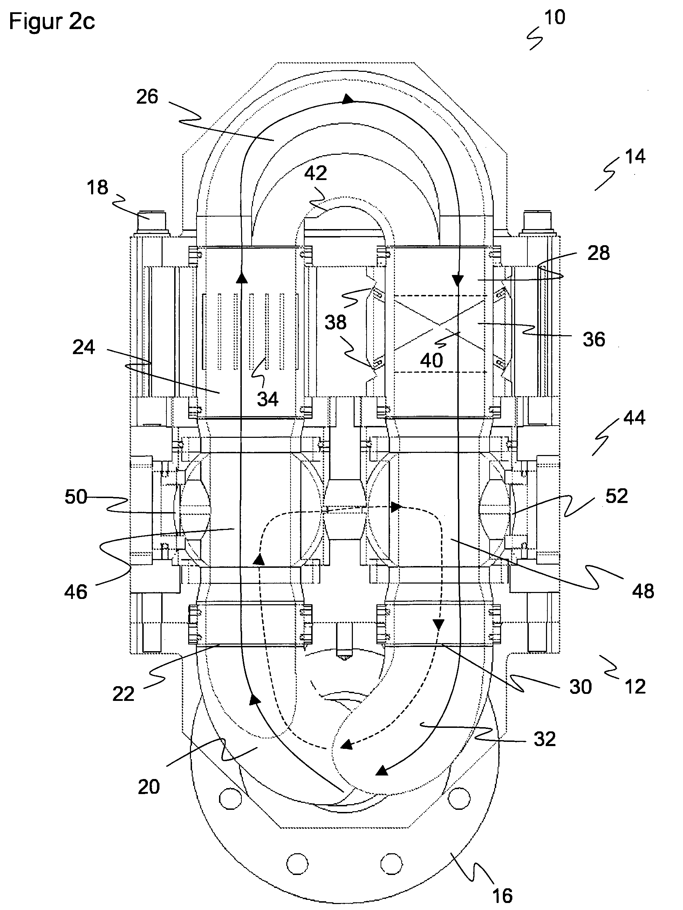

Figur 2 zeigt eine weitere Ausführungsform der erfindungsgemäßen Ultraschallmessvorrichtung 10. Dabei ist Figur 2a eine dreidimensionale Außenansicht, Figur 2b ein Längsschnitt und Figur 2c eine Schnittdarstellung quer der Hauptströmungsrichtung. Hier und im Folgenden bezeichnen gleiche Bezugszeichen die gleichen oder einander entsprechende Merkmale.

In der Ausführungsform gemäß Figur 1 ist das Messmodul 14 das einzige Aufsatzmodul. Im Unterschied dazu weist die Ausführungsform gemäß Figur 2 ein Bypassmodul 44 als weiteres Aufsatzmodul auf, welches zwischen Basisstück 12 und Messmodul 14 montierbar ist. An der Strömungsführung und der Schleife ändert sich durch das Bypassmodul 44 zunächst nichts, denn das Bypassmodul 44 umfasst zwei Verlängerungsstücke 46, 48 für den Zustrom und den Abstrom. Das Bypassmodul 44 verbindet in einer Grundstellung über die Verbindungsstücke 46, 48 die Öffnungen 22, 30 des Basisstücks 12 druckdicht mit den geraden Teilbereichen 24, 28 des Messmoduls 14.

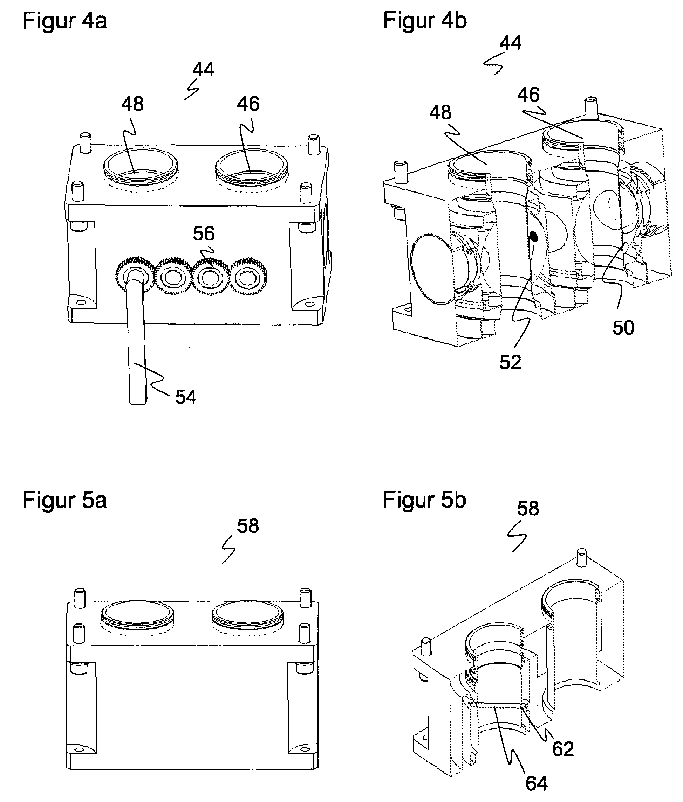

Das Bypassmodul 44 ist in Figur 4a in einer dreidimensionalen Ansicht und in Figur 4b in einem Längsschnitt nochmals gesondert dargestellt. Je eine als T-förmig gelochte Kugel ausgebildete Bypassumlenkung 50, 52 bildet in einer ersten Stellung in einem geraden Strömungsweg die Verbindungsstücke 46, 48. Durch Drehung der Kugeln werden die Bypassumlenkungen 50, 52 ähnlich der Funktionsweise eines Dreiwege-Kugelhahns in eine zweite Stellung überführt und bilden dann stattdessen eine Querleitung. Dies ist beispielsweise in Figur 4b erkennbar, wobei die links dargestellte Bypassumlenkung 50 um 90° gegen und die rechts dargestellte Bypassumlenkung 52 um 90° mit dem Uhrzeigersinn gedreht würde. Ist die Querleitung in der zweiten Stellung geöffnet, so ist der Strömungsweg in die Schleife und damit zu dem Messmodul 14 gesperrt, und das Fluid strömt stattdessen durch die als Bypass dienende Querleitung. Diese Situation während der zweiten Stellung ist in Figur 2c durch einen gestrichelten Pfeil illustriert, während die Darstellungen ansonsten einschließlich des durchgezogenen Pfeils der ersten Stellung entsprechen. An den Kugeln der Bypassumlenkungen 50, 52 angeordnete Dichtungen verhindern den Fluidaustritt in den jeweils abgesperrten Kanal.

Zur vereinfachten synchronen Betätigung der Bypassumlenkungen 50, 52 ist ein Hebel 54 und eine mechanische Kopplung 56 der beiden Bypassumlenkungen 50, 52 vorgesehen. Diese Kopplung ist in den Figuren rein beispielhaft als vier Zahnräder dargestellt, um zu illustrieren, dass die Kopplung 56 die Drehrichtung umkehrt.

Um nun das Messmodul 14 auszutauschen, genügt es, den Hebel 54 zu betätigen und damit in der zweiten Stellung der Bypassumlenkungen 50, 52 die Strömung des Fluids durch die Querleitung zu führen. Das Messmodul 14 wird dadurch drucklos und kann problemlos ausgetauscht werden, beispielsweise gegen ein vorkalibriertes Austauschmessmodul. Nach erfolgtem Austausch wird der Hebel 54 erneut betätigt, damit die erste Stellung der Bypassumlenkungen 50, 52 wiederhergestellt und das Fluid erneut über die Schleife durch den Ultraschallmessbereich 36 geführt. Der Fluidstrom muss zu keinem Augenblick des Austauschs unterbrochen werden.

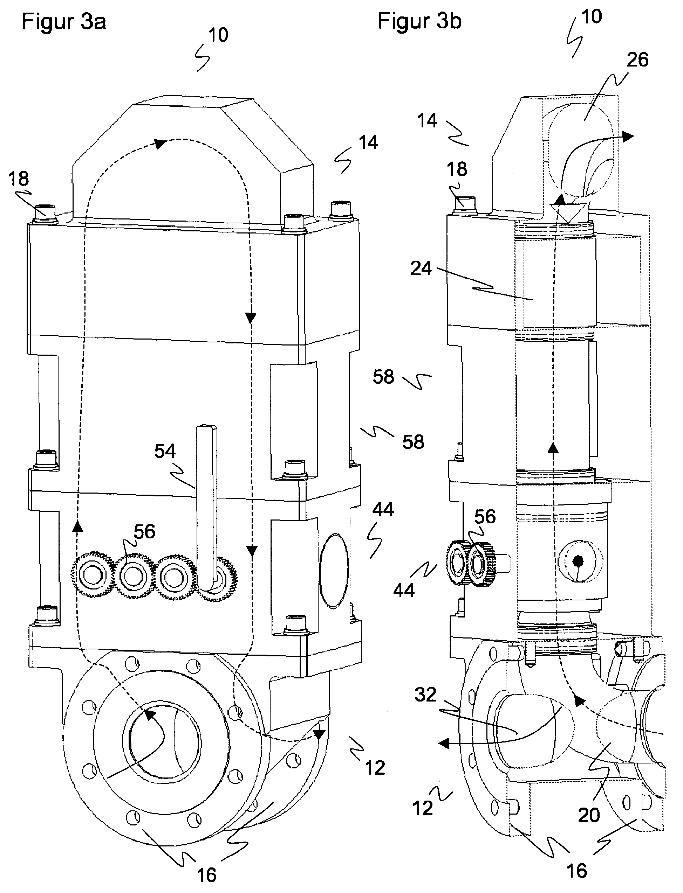

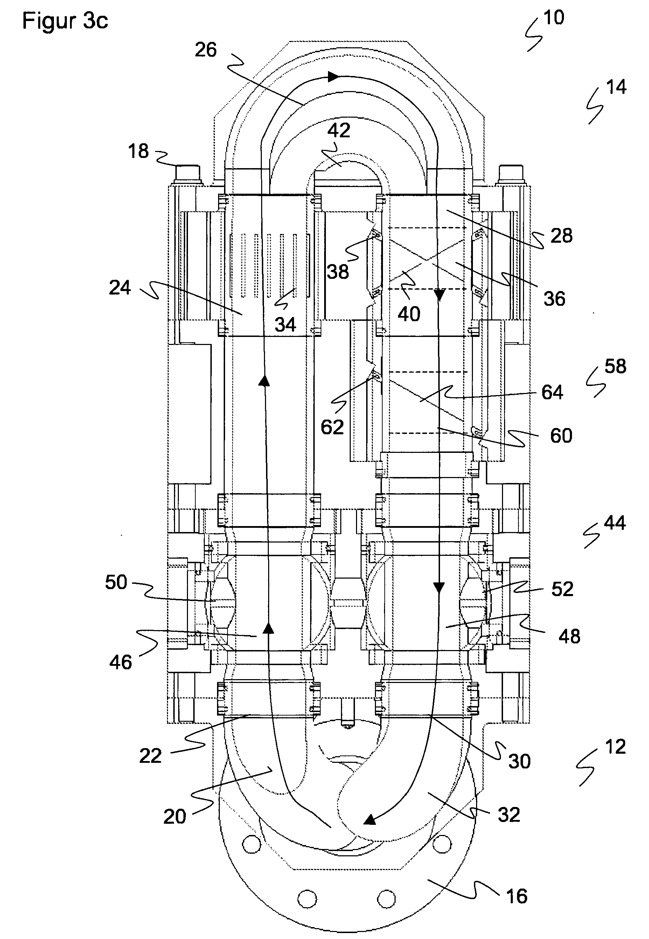

Figur 3 zeigt eine weitere Ausführungsform der erfindungsgemäßen Ultraschallmessvorrichtung 10. Dabei ist Figur 3a eine dreidimensionale Außenansicht, Figur 3b ein Längsschnitt und Figur 3c eine Schnittdarstellung quer der Hauptströmungsrichtung.

Im Unterschied zu der Ausführungsform gemäß Figur 2 ist ein weiteres als Kalibrierungsmodul 58 ausgebildetes Aufsatzmodul zwischen dem Bypassmodul 44 und dem Messmodul 14 montiert. Figur 5a zeigt das Kalibrierungsmodul 58 gesondert in einer dreidimensionalen Ansicht und Figur 5b einen entsprechenden Längsschnitt.

Das Kalibrierungsmodul 58 weist einen eigenen Ultraschallmessbereich 60 auf, in dem ein Paar Ultraschallwandler 62 einen Messpfad 64 aufspannen. Auch hier sind zusätzliche Ultraschallwandler und damit zusätzliche Messpfade möglich. Das Kalibrierungsmodul dient dazu, weitere Messwerte für die Strömungsgeschwindigkeit als Referenz für das Messmodul 14 zu liefern. Diese Messwerte können zur Plausibilisierung des Messmoduls 14 oder zu dessen Kalibrierung verwendet werden.

Das Kalibrierungsmodul 58 ist nur ein Beispiel des vorteilhaften Einsatzes weiterer Aufsatzmodule. Beispielsweise ist in einer weiteren Ausführungsform denkbar, ein zusätzliches Messmodul zwischen Basisstück 12 und Bypassmodul 44 zu montieren, welches Messwerte liefert, während die Strömung durch die Querleitung des Bypassmoduls 44 in der zweiten Stellung der Bypassumlenkungen 50, 52 geführt wird. Damit können während des Austauschs oder der Wartung des Messmoduls 14 weiterhin Daten über die Strömungsgeschwindigkeit zur Verfügung gestellt werden. In einer weiteren alternativen Ausführungsform werden verschiedene Messmodule für unterschiedlichen Druck, unterschiedliche Genauigkeitsanforderungen, Messbereiche oder Zusammensetzung des zu messenden Fluids bereitgestellt.

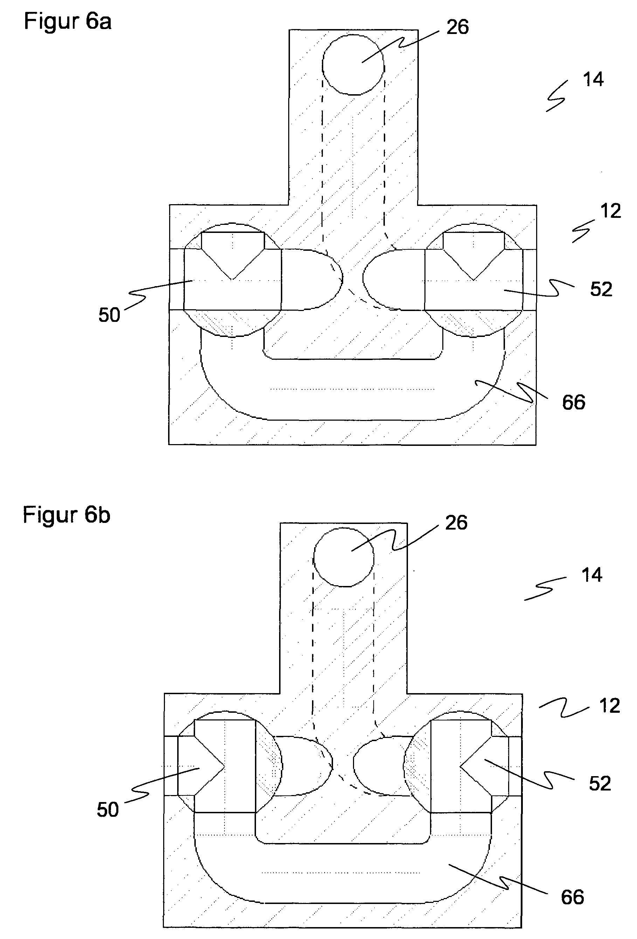

Figur 6 zeigt eine alternative Ausgestaltung einer Bypassleitung. Dabei ist die Bypassleitung nicht in einem eigenen Bypassmodul 44 vorgesehen, sondern in das Basisstück 12 integriert. Figur 6a zeigt die Situation während des Messbetriebs. Das Fluid strömt durch das Basisstück 12 in das Messmodul 14 und erneut durch das Basisstück 12 zurück in die Rohrleitung. Die Bypassleitung 66 bleibt dabei ungenutzt

Figur 6b stellt die alternative Situation während Wartungsarbeiten dar. Das Messmodul 14 ist drucklos und kann gefahrlos und ohne Abschaltung der Strömung des Fluids ausgetauscht werden. Währenddessen durchströmt das Fluid die Bypassleitung 66. Ähnlich wie im Falle des Bypassmoduls 44 sind Bypassumlenkungen 50, 52 vorgesehen, die nach einem Dreiwegehahnprinzip zwischen den beiden Betriebsarten der Bypassleitung 66 umschalten.

## Patentansprüche

1. Ultraschallmessvorrichtung (10) zum Messen der Strömungsgeschwindigkeit eines Fluids, welches in einer Rohrleitung in einer Hauptströmungsrichtung strömt, wobei die Ultraschallmessvorrichtung (10) einen Ultraschallmessbereich (36) mit mindestens einem Paar Ultraschallwandler (38), eine Auswertungseinheit zur Bestimmung der Strömungsgeschwindigkeit aus einer Laufzeitdifferenz von mit und gegen die Strömung ausgesandtem und empfangenem Ultraschall sowie eine Umlenkeinheit aufweist, mittels derer das Fluid aus der Hauptströmungsrichtung umlenkbar und dem Ultraschallmessbereich (36) zuführbar ist, wobei die Umlenkeinheit (20, 26, 32) eine Schleife bildet, **dadurch gekennzeichnet,**
**dass** die Schleife
- eine erste Ablenkung (20) zum Ablenken des Fluids aus der Hauptströmungsrichtung,
- einen Zuströmbereich (24),
- einen Bogen (26) zum Umlenken der Strömung,
- einen Abströmbereich (28), und
- eine zweite Ablenkung (32) zum Umlenken des Fluids zurück in die Hauptströmungsrichtung aufweist,
wobei das Fluid aus der Hauptströmungsrichtung durch die erste Ablenkung (20) in den Zuströmbereich (24), von dort durch den Bogen (26) in den Abströmbereich (28) und schließlich durch die zweite Ablenkung (32) zurück in die Hauptströmungsrichtung umlenkbar ist, dass der Ultraschallmessbereich (36) in dem Abströmbereich vorgesehen ist, so dass sich die Strömung bei Eintritt in den Ultraschallmessbereich (36) reproduzierbar stabilisiert, und dass die Ultraschallwandler (38) in dem Ultraschallmessbereich (36) derart angeordnet sind, dass der ausgesandte und empfangene Ultraschall zumindest eine Komponente in Querrichtung der Strömung aufweist.

2. Ultraschallmessvorrichtung (10) nach Anspruch 1,
wobei die erste Ablenkung (20) und die zweite Ablenkung (32) einen rechten Winkel und der Bogen (26) einen Winkel von 180° bilden.

3. Ultraschallmessvorrichtung (10) nach Anspruch 1 oder 2,
wobei Zuströmbereich und Abströmbereich jeweils einen nebeneinander angeordneten Teilbereich (24, 28) aufweisen und parallel zueinander ausgerichtet sind, wobei insbesondere eine Ebene, welche die beiden geraden Teilbereiche (24, 28) umfasst, senkrecht zu der Hauptströmungsrichtung steht.

4. Ultraschallmessvorrichtung (10) nach einem der vorhergehenden Ansprüche,
wobei die Schleife glatt und ohne scharfe Richtungsänderungen oder Einschnürungen ausgebildet ist, wobei insbesondere der Bogen (26) eine Wandkontur (42) aufweist, welche einen gezielten Strömungsabriss in einem für die Ultraschallmessung unkritischen Bereich bewirkt.

5. Ultraschallmessvorrichtung (10) nach einem der vorhergehenden Ansprüche,
wobei in dem Zuströmbereich und/oder in dem Abströmbereich ein Strömungsgleichrichter (34) vorgesehen ist.

6. Ultraschallmessvorrichtung (10) nach einem der vorhergehenden Ansprüche, die ein rohrförmiges Basisstück (12) mit Anschlussbereichen (16), insbesondere Flanschen für die Rohrleitung aufweist, welches die erste Ablenkung (20) und die zweite Ablenkung (32) umfasst.

7. Ultraschallmessvorrichtung (10) nach einem der vorhergehenden Ansprüche, die mindestens ein Aufsatzmodul (14, 44 58) aufweist, welches jeweils ein Verlängerungsstück für den Zuströmbereich und den Abströmbereich umfasst und welches mit dem Basisstück (12) oder einem anderen Aufsatzmodul (14, 44, 58) verbindbar und von dem Basisstück (12) oder dem anderen Aufsatzmodul (14, 44, 58) lösbar ist, wobei ein abschließendes Aufsatzmodul (14, 44, 58) den Bogen (26) umfasst.

8. Ultraschallmessvorrichtung (10) nach Anspruch 7,
die mindestens ein als Messmodul (14) ausgebildetes Aufsatzmodul mit dem Ultraschallmessbereich (36) umfasst.

9. Ultraschallmessvorrichtung (10) nach Anspruch 7 oder 8,
die ein als Bypassmodul (44) ausgebildetes Aufsatzmodul mit einer Querleitung zwischen dem Zuströmbereich und dem Abströmbereich oder eine in das Basisstück (12) integrierte Querleitung aufweist, wobei eine Bypassumlenkung (50, 52) vorgesehen ist, die wahlweise in einer Stellung die Strömung zu der Querleitung und aus der Querleitung sperrt und die Strömung zu dem Zuströmbereich und aus dem Abströmbereich freigibt und in einer anderen Stellung die Strömung zu dem Zuströmbereich und aus dem Abströmbereich sperrt und die Strömung zu der Querleitung und aus der Querleitung freigibt.

10. Ultraschallmessvorrichtung (10) nach Anspruch 9,
wobei die Bypassumlenkung (50, 52) nach dem Prinzip eines Dreiwegehahns ausgebildet ist, insbesondere zwei T-fömig gelochte Kugeln mit Dichtungen aufweist, welche untereinander gekoppelt und somit gemeinsam aus der einen Stellung in die andere Stellung überführbar sind.

11. Ultraschallmessvorrichtung (10) nach einem der Ansprüche 7 bis 10,
die ein als Kalibrierungsmodul (58) ausgebildetes Aufsatzmodul mit mindestens einem Paar Ultraschallwandler (62) zur Plausibilisierung oder Kalibrierung der Messwerte des Ultraschallmessbereichs (36) aufweist.

12. Verwendung einer Ultraschallmessvorrichtung (10) nach einem der vorhergehenden Ansprüche als Gaszähler an einer Gaspipeline.

13. Verfahren zum Messen der Strömungsgeschwindigkeit eines Fluids, welches in einer Rohrleitung in einer Hauptströmungsrichtung strömt, wobei die Strömungsgeschwindigkeit aus einer Laufzeitdifferenz von mit und gegen die Strömung von einem Paar Ultraschallwandler (38) in einem Ultraschallmessbereich (36) ausgesandtem und empfangenem Ultraschall bestimmt wird, wobei das Fluid zum Messen aus der Hauptströmungsrichtung umgelenkt und dem Ultraschallmessbereich (36) zugeführt wird, wobei die Ultraschallmessung stattfindet, während das Fluid derart umgelenkt wird, dass es in einer Schleife strömt, die einen Zuströmbereich und einen Abströmbereich aufweist,
**dadurch gekennzeichnet,**
**dass** das Fluid aus der Hauptströmungsrichtung durch eine erste Ablenkung (20) in den Zuströmbereich (24) abgelenkt wird, von dort durch einen Bogen (26) in den Abströmbereich (28) umgelenkt wird und schließlich durch eine zweite Ablenkung (32) zurück in die Hauptströmungsrichtung umgelenkt wird, dass der Ultraschallmessbereich (36) in dem Abströmbereich vorgesehen ist, so dass sich die Strömung bei Eintritt in den Ultraschallmessbereich (36) reproduzierbar stabilisiert, und dass die Ultraschallwandler (38) in dem Ultraschallmessbereich (36) derart angeordnet sind, dass sie Ultraschall zumindest mit einer Komponente in Querrichtung der Strömung aussenden und empfangen.

## Claims

1. An ultrasonic measurement apparatus (10) for measuring the flow velocity of a fluid which flows in a pipeline in a main flow direction, wherein the ultrasonic measurement apparatus (10) has an ultrasonic measurement zone (36) with at least a pair of ultrasonic transducers (38), an evaluation unit for determining the flow velocity from a propagation time difference of ultrasound transmitted and received with and against the flow, as well as a deflection unit, by means of which the fluid is deflectable from the main flow direction and suppliable to the ultrasonic measurement zone (36), wherein the deflection unit (20, 26, 32) forms a loop,
**characterized in that** the loop has
- a first deflector (20) for deflecting the fluid from the main flow direction,
- an inflow region (24),
- an arc (26) for deflecting the flow,
- an outflow region (28), and
- a second deflection for deflecting the flow back into the main flow direction,
wherein the fluid is deflectable from the main flow direction into the inflow region (24) by means of the first deflector (20), from there into the outflow region (28) by means of the arc (26) and subsequently back into the main flow direction by means of the second deflector (32), **in that** the ultrasonic measurement zone (36) is provided in the outflow region so that the flow is reproducibly stabilized on entry into the ultrasonic measurement zone (36), and **in that** the ultrasonic transducers (38) are arranged in the ultrasonic measurement zone (36) such that the transmitted and the received ultrasound has at least one component in a direction transverse to the flow.

2. An ultrasonic measurement apparatus (10) in accordance with claim 1,
wherein the first deflector (20) and the second deflector (32) form a right angle and the arc (26) forms an angle of 180°.

3. An ultrasonic measurement apparatus (10) in accordance with claim 1 or 2,
wherein the inflow region and the outflow region each have a partial region (24, 28) arranged adjacent to one another and aligned in parallel to one another, wherein in particular a plane, which includes both straight partial regions (24, 28), is perpendicular to the main flow direction.

4. An ultrasonic measurement apparatus (10) in accordance with any of the preceding claims,
wherein the loop is designed smooth and without sharp changes in direction or constrictions, wherein in particular the arc (26) has a wall contour (42) which causes a specific flow stall in a zone uncritical for the ultrasonic measurement.

5. An ultrasonic measurement apparatus (10) in accordance with any of the preceding claims,
wherein a flow rectifier (34) is provided in the inflow region and/or in the outflow region.

6. An ultrasonic measurement apparatus (10) in accordance with any of the preceding claims,
comprising a pipe shaped base piece (12) having connection regions (16), in particular flanges for the pipeline, which includes the first deflector (20) and the second deflector (32).

7. An ultrasonic measurement apparatus (10) in accordance with any of the preceding claims,
having at least one add-on module (14, 44, 58) which has a respective extension piece for the inflow region and the outflow region and which is connectable to the base piece (12) or to any other add-on module (14, 44, 58) and is separable from the base piece (12) or from the other add-on module (14, 44, 58), wherein a final add-on module (14, 44, 58) includes the arc (26).

8. An ultrasonic measurement apparatus (10) in accordance with claim 7,
which includes at least one add-on module designed as a measurement module (14) having the ultrasonic measurement zone (36).

9. An ultrasonic measurement apparatus (10) in accordance with claim 7 or 8,
which has an add-on module configured as a bypass module (44) having a transverse line between the inflow region and the outflow region or a transverse line integrated into the base piece (12), wherein a bypass deflector (50, 52) is provided which selectively closes the flow to the transverse line and from the transverse line and releases the flow to the inflow area and from the outflow area in one position and in another position selectively closes the flow to the inflow region and from the outflow region and releases the flow to the transverse line and from the transverse line.

10. An ultrasonic measurement apparatus (10) in accordance with claim 9,
wherein the bypass deflector (50, 52) is configured on the principle of a three way tap, in particular has two spheres perforated in T-shape with seals which are coupled amongst one another and are thus commonly transferrable from the one position into the other position.

11. An ultrasonic measurement apparatus (10) in accordance with any of claims 7 to 10,
which has an add-on module configured as a calibration module (58) with at least one pair of ultrasonic transducers (62) for a plausibility check or calibration of the measurement values of the ultrasonic measurement zone (36).

12. Use of an ultrasonic measurement apparatus (10) in accordance with any of the preceding claims as a gas counter at a gas pipeline.

13. A method for measuring the flow velocity of a fluid which flows in a pipeline in a main flow direction, wherein the flow velocity is determined from a propagation time difference of ultrasound transmitted and received with and against the flow from a pair of ultrasonic transducers (38) in an ultrasonic measurement zone (36), wherein the fluid is deflected from the main flow direction and supplied to the ultrasonic measurement zone (36) for the measurement, wherein the ultrasonic measurement takes place whilst the fluid is deflected such that it flows in a loop comprising an inflow region and an outflow region,
**characterized in that** the fluid is deflected from the main flow direction into the inflow region (24) by means of a first deflector (20), from there into the outflow region (28) by means of an arc (26) and subsequently back into the main flow direction by means of a second deflector (32), **in that** the ultrasonic measurement zone (36) is provided in the outflow region so that the flow is reproducibly stabilized on entry into the ultrasonic measurement zone (36), and **in that** the ultrasonic transducers (38) are arranged in the ultrasonic measurement zone (36) such that they transmit and receive ultrasound with at least one component in a direction transverse to the flow.

## Revendications

1. Dispositif de mesure à ultrasons (10) pour mesurer la vitesse d'écoulement d'un fluide qui s'écoule dans une conduite tubulaire dans une direction d'écoulement principale, dans lequel le dispositif de mesure à ultrasons (10) comprend une zone de mesure à ultrasons (36) avec au moins une paire de transducteurs à ultrasons (38), une unité d'évaluation pour déterminer la vitesse d'écoulement à partir d'une différence du temps de parcours des ultrasons émis et reçus avec l'écoulement et en sens contraire, ainsi qu'une unité de déviation au moyen de laquelle le fluide peut être dévié depuis la direction d'écoulement principale et amené à la zone de mesure à ultrasons (36), dans lequel l'unité de déviation (20, 26, 32) forme une boucle, **caractérisé en ce que**
la boucle comprend
- un premier déflecteur (20) pour défléchir le fluide hors de la direction d'écoulement principal,
- une zone d'écoulement entrant (24),
- un coude (26) pour dévier l'écoulement,
- une zone d'écoulement sortant (28), et
- un second déflecteur (32) pour envoyer le fluide en retour dans la direction d'écoulement principale,
dans lequel le fluide est susceptible d'être dévié depuis la direction d'écoulement principale par le premier déflecteur (20) vers la zone d'écoulement entrant (24), d'être dévié de celle-ci par le coude (26) jusque dans la zone d'écoulement sortant (28), et enfin d'être dévié par le second déflecteur (32) en retour vers la direction d'écoulement principale,
**en ce que** la zone de mesure à ultrasons (36) est prévue dans la zone d'écoulement sortant, de sorte que l'écoulement se stabilise de manière reproductible à l'entrée dans la zone de mesure à ultrasons (36), et
**en ce que** les transducteurs à ultrasons (38) sont agencés dans la zone de mesure à ultrasons (36) de telle façon que les ultrasons émis et reçus présentent au moins une composante en direction transversale à l'écoulement.

2. Dispositif de mesure à ultrasons (10) selon la revendication 1,
dans lequel le premier déflecteur (20) et le second déflecteur (32) forment un angle droit, et le coude (26) forme un angle de 180°.

3. Dispositif de mesure à ultrasons (10) selon la revendication 1 ou 2, dans lequel la zone d'écoulement entrant et la zone d'écoulement sortant comprennent chacune une zone partielle (24, 28) agencées l'une à côté de l'autre, et sont orientées parallèlement l'une à l'autre, et un plan qui inclut les deux zones partielles droites (24, 28) est en particulier perpendiculaire à la direction d'écoulement principale.

4. Dispositif de mesure à ultrasons (10) selon l'une des revendications précédentes, dans lequel la boucle est réalisée lisse et sans forte modification de direction ou rétrécissement, et le coude (26) comporte en particulier un contour de paroi (42) qui provoque un décollement ciblé de l'écoulement dans une région non critique pour la mesure à ultrasons.

5. Dispositif de mesure à ultrasons (10) selon l'une des revendications précédentes, dans lequel un égalisateur d'écoulement (34) est prévu dans la zone d'écoulement entrant et/ou dans la zone d'écoulement sortant.

6. Dispositif de mesure à ultrasons (10) selon l'une des revendications précédentes, qui comprend une pièce de base (12) de forme tubulaire avec des zones de raccordement (16), en particulier des brides pour la conduite tubulaire, ladite pièce incluant le premier déflecteur (20) et le second déflecteur (32).

7. Dispositif de mesure à ultrasons (10) selon l'une des revendications précédentes, qui comprend au moins un module rapporté (14, 44, 48), qui inclut respectivement une pièce de prolongement pour la zone d'écoulement entrant et la zone d'écoulement sortant, et qui est susceptible d'être relié à la pièce de base (12) ou à un autre module rapporté (14, 44, 58) et d'être détaché de la pièce de base (12) ou d'un autre module rapporté (14, 44, 58), dans lequel un module rapporté successif (14, 44, 58) inclut le coude (28).

8. Dispositif de mesure à ultrasons (10) selon la revendication 7, qui inclut au moins un module rapporté, réalisé comme module de mesure (14) avec la zone de mesure à ultrasons (36).

9. Dispositif de mesure à ultrasons (10) selon la revendication 7 ou 8, qui comprend un module rapporté, réalisé comme module de by-pass (44) avec un conduit transversal entre la zone d'écoulement entrant et la zone d'écoulement sortant ou un conduit transversal intégré dans la pièce de base (12), dans lequel il est prévu un déflecteur de by-pass (50, 52) qui, de manière sélective, dans une position bloque l'écoulement vers le conduit transversal et depuis le conduit transversal, et libère l'écoulement vers la zone d'écoulement entrant et hors de la zone d'écoulement sortant et, dans une autre position bloque l'écoulement vers la zone d'écoulement entrant et hors de la zone d'écoulement sortant et libère l'écoulement vers le conduit transversal et depuis le conduit transversal.

10. Dispositif de mesure à ultrasons (10) selon la revendication 9,
dans lequel le déflecteur de by-pass (50, 52) est réalisé d'après le principe d'une vanne à trois voies, en particulier deux sphères percées en forme de T avec des joints, qui sont couplées l'une à l'autre et peuvent par conséquent être passées conjointement d'une position vers l'autre position.

11. Dispositif de mesure à ultrasons (10) selon l'une des revendications 7 à 10,
qui comprend un module rapporté, réalisé comme module de calibrage (58), avec au moins une paire de transducteurs à ultrasons (66) pour l'évaluation de plausibilité ou le calibrage des valeurs de mesure de la zone de mesure à ultrasons (36).

12. Utilisation d'un dispositif de mesure à ultrasons (10) selon l'une des revendications précédentes à titre de compteur de gaz sur un pipeline à gaz.

13. Procédé pour mesurer la vitesse d'écoulement d'un fluide qui s'écoule dans une conduite tubulaire dans une direction d'écoulement principale, dans lequel la vitesse d'écoulement est déterminée à partir d'une différence du temps de parcours des ultrasons émis et reçus dans une zone de mesure à ultrasons (36) avec l'écoulement et en sens contraire par une paire de transducteurs à ultrasons (38), dans lequel, pour la mesure, le fluide est dévié hors de la direction d'écoulement principale et est amené à la zone de mesure à ultrasons (36), et la mesure à ultrasons a lieu pendant que le fluide est dévié de telle façon qu'il s'écoule dans une boucle qui comprend une zone d'écoulement entrant et une zone d'écoulement sortant,
**caractérisé en ce que**
le fluide est dévié hors de la direction d'écoulement principale par un premier déflecteur (20) vers la zone d'écoulement entrant (24) et est dévié depuis celle-ci par un coude (26) vers la zone d'écoulement sortant (28), et est enfin dévié par un second déflecteur (32) en retour vers la direction d'écoulement principale,
**en ce que** la zone de mesure à ultrasons (36) est prévue dans la zone d'écoulement sortant, de telle façon que l'écoulement se stabilise de manière reproductible à l'entrée dans la zone de mesure à ultrasons (36), et **en ce que** les transducteurs à ultrasons (38) sont agencés dans la zone de mesure à ultrasons (36) de telle façon qu'ils émettent et qu'ils reçoivent des ultrasons avec au moins une composante en direction transversale à l'écoulement.
